# EUROPEAN PATENT SPECIFICATION

(11) **EP 4 520 173 B1**
(45) Date of publication and mention of the grant of the patent: **04.02.2026**
(21) Application number: 24199385.6
(22) Date of filing: 10.09.2024
(51) Int. Cl.: A21C 11/16, A21D 8/06, A21D 13/11, A21D 13/13, A23P 30/20, A23P 30/25, A23G 3/02

(54) **PROCESS FOR PRODUCING BISCUITS HAVING A PLAIT SHAPE**
VERFAHREN ZUR HERSTELLUNG VON KEKSEN IN PLAITFORM
PROCÉDÉ POUR LA FABRICATION DE BISCUITS AYANT UNE FORME DE PELOT

(30) Priority: 11.09.2023 IT 202300018579
(43) Date of publication of application: 12.03.2025
(73) Proprietor: Barilla G. e R. Fratelli S.p.A., 43122 Parma (IT)
(72) Inventor: FERRARI, Corrado, 43122 Parma (IT); VOLPATO, Roberto, 43022 Monticelli Terme (PR) (IT); BERANTI, Angelo, 26041 Casalmaggiore (CR) (IT)
(74) Representative: Botti & Ferrari S.p.A.

(56) References cited:
- EP-A1- 1 036 500
- EP-A2- 0 102 232
- EP-A2- 0 202 143
- WO-A1-97/25881
- JP-A- 2004 024 008
- US-A- 2 856 868
- US-A- 4 689 236
- US-A1- 2020 008 432
- US-B1- 6 450 796
- MARISA: "Biscotti bicolori da colazione - Biscotti intrecciati", 21 May 2022 (2022-05-21), XP002811197, Retrieved from the Internet <URL:https://web.archive.org/web/20220521082027/https://blog.giallozafferano.it/loti64/biscotti-bicolori-da-colazione/> [retrieved on 20240311]

## Description

### Field of application

The present invention relates to the production of biscuits, particularly applicable wherein wherein a dichotomy of flavors and/or colors, obtained through the use of starting doughs of different types, is evident. In fact, said doughs may have different structure and/or texture and each dough may comprise characterizing ingredients that give it colors and/or flavors that are different from and contrasting with those of the other doughs cooperating to the "composition" of the biscuit. The invention is set out in the appended set of claims.

The present invention relates to a process for obtaining biscuits, such as shortbread biscuits, having a plait shape.

The term "shortbread biscuits" indicates biscuits based on a shortcrust-pastry dough or a similar dough.

The present description also relates to biscuits, which are not encompassedby the wording of the claims, such as shortbread biscuits, having substantially a plait shape, said plait comprising at least two different baked doughs both having helicoidal development and being plaited with each other.

### Prior art

Processes for the production of shortbread biscuits based on the use of at least two different starting doughs that are suitable to give the biscuits a desired and predetermined dichotomy of structure and/or color and/or flavor are known in the art. In particular, processes of the above-mentioned type for obtaining shortbread biscuits having substantially a plait shape, wherein said plait is obtained by plaiting starting shortcrust-pastry doughs of different types, are known.

For example, Patent Application EP1636500 in the name of the Applicant describes a method for obtaining shortbread biscuits in a plaited shape, wherein two different shortcrust-pastry doughs are continuously extruded from respective dispensing nozzles of a forming head, thereby obtaining respective dough strands that are rectilinear and independent of each other, the free ends of said dough strands are joined to each other by anchoring them on a conveyor belt underlying the above-mentioned dispensing nozzles, and thus a dough strand is continuously helicoidally wound around the other dough strand, which is maintained in a rectilinear condition, by rotating the nozzle dispensing the dough strand to be wound around the other dispensing nozzle which is maintained fixed.

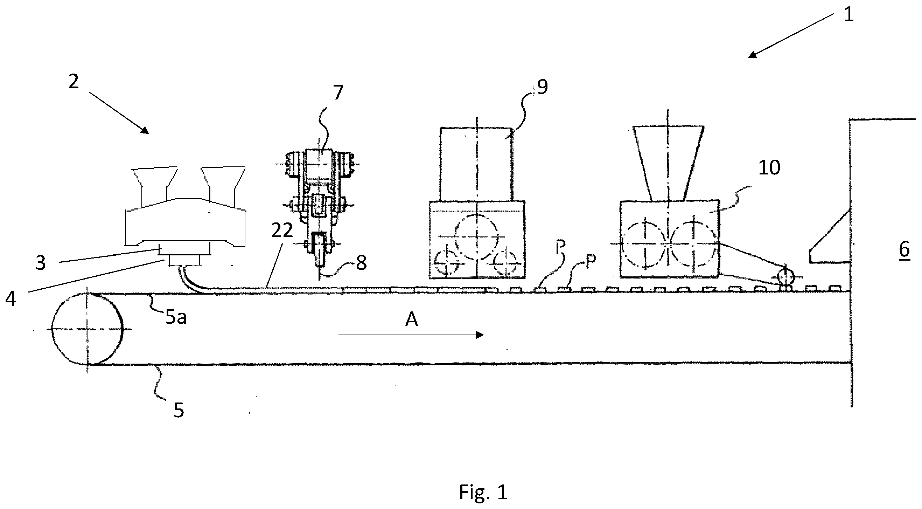

Moreover, patent US 8177542 describes an extrusion apparatus equipped with an extrusion head provided with rotating nozzles which is intended to be used with two or more dough types having different characteristics (for example, texture and/or color) to produce plaited food products. More specifically, in the embodiment illustrated in Figures 1-5 of the present patent, a first dough coming from a first extruder is introduced under pressure into a mixing chamber where also a second and a third doughs coming from respective extruders are introduced. The second and the third doughs are mixed with the first dough in the above-mentioned mixing chamber, and the mixed dough thereby obtained flows through an inlet which converges into an extrusion head provided with one central nozzle and two lateral nozzles placed in line so as to obtain a continuous plait comprising a rectilinear (i.e. not wound) central strand exiting the central nozzle which is held stationary and strands that are plaited around the central strand, which strands exit the lateral nozzles being put into rotation.

US 2 856 868 describes a method and a device for the production of bread, involving coextrusion of bread-dough strands and plaiting said strands one around the other.

WO 97/25881 discloses a method for the production of a cereal-based snacks in a plait shape, obtained by the extrusion of strands of baked cereal dough.

US 2020/008432 discloses a method for the production of crackers in a plait shape, wherein, by means of an assembly of rotating nozzles, two or more plaited dough strands are obtained, which are laid onto a conveyor belt, cut into segments and baked in oven.

None of the above-mentioned prior documents describes extruders involving the use of volumetric dosing pumps placed downstream of extruding rollers and cooperating with the latter.

Although the processes for the production of shortbread biscuits based on the use of at least two different starting doughs allow to obtain a wide variety of shapes and dough combinations, in the field there is the need of further shape variants, with particular reference to variants of biscuits in a plait shape, to improve the attractiveness of these products to the end consumer.

In this regard, it should be noted, however, that the known processes for obtaining shortbread biscuits in a plait shape are not so versatile, so that it is difficult, if not impossible, to vary the shape of the plait, also because of the plastic structure of the shortcrust-pastry doughs, rich in fat, which causes the extruded dough strands to easily "break" during processing.

The main object of the present invention is thus to provide a process for obtaining biscuits in a plait shape that allows to obtain new plait shapes from a plurality of doughs, in particular different doughs in which a dichotomy of flavors and/or colors is evident, so as to meet said need.

Another object of the present invention is to provide a process as indicated above that is not difficult to be implemented at an industrial level and/or does not require the use of complicated and/or expensive apparatuses.

### Summary of the invention

The above-mentioned objects are primarily achieved by a process for obtaining biscuits in a plait shape comprising the steps of:
- providing an apparatus comprising an extruder having at least one rotatable mouth provided with at least two dispensing nozzles that are eccentric with reference to the axis of rotation of the respective rotatable mouth, at least two independent chambers, each one of them being in fluid communication with a respective dispensing nozzle of said at least one rotatable mouth, and at least two dosing devices, which are each arranged between a respective chamber of the extruder and said at least one rotatable mouth, the apparatus further comprising a conveyor belt arranged under said nozzles,
- preparing at least two doughs for biscuits having a prefixed viscoelasticity,
- compressing said food doughs in the respective chambers of the extruder and pushing them in predetermined flow rates from said dosing devices toward a respective dispensing nozzle of said at least one rotatable mouth,
- continuously extruding said doughs from said respective dispensing nozzles of said at least one rotatable mouth, thereby obtaining respective strands of said doughs exiting the nozzles of each rotatable mouth, said strands of said doughs being independent, substantially rectilinear and having respective free ends, vertically directed towards and onto said conveyor belt in motion,
- joining the free ends of said strands to each other by anchoring them onto said conveyor belt,
- continuously helicoidally winding up the strands of the doughs exiting said at least one rotatable mouth by rotating said at least one mouth, thereby obtaining a semifinished product comprising at least one continuous plait of said doughs having each a helicoidal development and being plaited with each other,
- subjecting said semifinished product comprising at least one continuous plait to an operation of cutting and portioning into parts of a prefixed length, and
- subjecting said parts of semifinished product to baking, thereby obtaining biscuits in a plaited shape,
wherein said extruder further comprises two pairs of extruding rollers that are side by side each placed in each chamber upstream of said dosing devices, and said step of compression of the doughs in the respective chambers is carried out by means of said extruding rollers, said dosing devices being volumetric dosing pumps, each one of which being in fluid communication with an outlet opening of a respective compression chamber and in fluid communication with a respective dispensing nozzle of said at least one mouth.

Preferably, the above-mentioned extruding rollers are put in rotation at a speed between 6 rpm and 14 rpm.

In an embodiment of the invention, the above-mentioned strands of the doughs are dispensed at a prefixed distance over said conveyor belt.

In an embodiment of the invention, at least one of the above-mentioned doughs is based on shortcrust pastry.

In one embodiment, the above-mentioned doughs are different from each other. In fact, said doughs may have different structure and/or texture and each dough may comprise characterizing ingredients that give it colors and/or flavors that are different from and contrasting with those of the other doughs cooperating to the "composition" of the biscuit.

The process according to the invention allows to produce a biscuit, such as a shortbread biscuit, having substantially a plait shape, which comprises at least two different baked doughs both having helicoidal development and being plaited with each other to form said plait.

The biscuit obtained by the process according to the invention, which *per se* is not according to the claimed invention, has a breaking strength (or fracturing index) between 750 Newton and 1000 Newton, said breaking strength being determined by means of a dynamometer provided with a load cell of 50Kg and Kramer cell (60x70cm -10 blades) by measuring the maximum force applied to obtain crushing of the biscuit. It has been found that at least 30% by weight, preferably between 30% and 50% by weight, of the biscuit fragments after breaking have a particle size lower than 1000 µm.

Further features and advantages of the present invention will become clearer in the following detailed description of a preferred embodiment thereof, said description being given by way of a non-limiting example with reference to the accompanying figures in which:
- Figure 1 schematically shows an apparatus for carrying out the process according to the invention,
- Figure 2 shows an enlarged-scale sectional view of an extruder of the apparatus of Figure 1;
- Figure 3 shows a detail of the extrusion head of an apparatus for carrying out the process according to the invention in an operational step of continuously helicoidally winding up the strands of the doughs exiting the rotatable mouths,
- Figures 4 and 5 show respective sectional and front views of a rotatable mouth of the extrusion head of the extruder of Figure 2, and
- Figure 6 shows a view of a shortbread biscuit obtained by the process according to the invention.

### Detailed description

With reference to the above-mentioned figures, an apparatus (outside the subject-matter of the claims) for obtaining biscuits in a plait shape by the process according to the present invention is referred to as a whole with reference number 1.

The apparatus 1 comprises a double-headed extruder 2 having at the bottom an extrusion die 3 provided with a plurality of dough-dispensing rotatable mouths 4. The apparatus further comprises a conveyor belt 5 having an active upper branch 5a, substantially horizontal, arranged under the dough-dispensing mouths 4 and in a preset spaced-apart relationship from them.

The conveyor belt 5 is used to continuously feed a baking oven 6 with the semifinished product (for example, uncooked shortbread biscuits) in a plaited shape, as specified later on in the description.

Downstream of the extruder 2, with reference to the forward direction A of the active branch 5a of the conveyor belt 5, there is a vertical cutting machine 7, which is per se conventional, for example and preferably a guillotine cutting machine, whose cutting blade is indicated with 8. In line with the cutting machine 7, between the cutting machine 7 and the baking oven 6, the apparatus 1 may comprise a closing machine 9 and a glazing-browning device 10, whose functions and use will become clear in the following description.

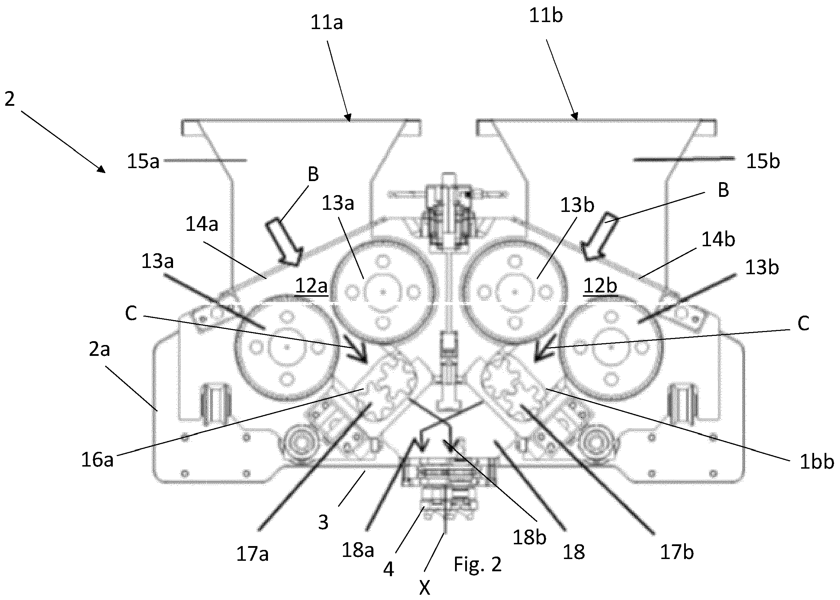

Referring to Figures 2-4, the extruder 2 comprises a body 2a in which two sections (extrusion heads) 11a and 11b are defined in a single piece, said sections being independent of each other and side by side.

Each extrusion head 11a or 11b is traversed by a passage defining a compression chamber 12a or 12b for a respective dough having inside a pair of extruding rollers 13a or 13b that are side by side, a dough-inlet upper end 14a or 14b in communication with a respective loading hopper 15a or 15b of a respective dough, and an outlet lower end 16a or 16b in communication with a respective dough-dosing device 17a or 17b.

The extruding rollers 13a or 13b are preferably grooved and are motorized, namely, they are connected to respective motors so as to be, in use, put in rotation at a predetermined speed of rotation and to push by pressure (compress) a respective dough introduced into the compression chamber 12a or 12b from the respective hopper 15a or 15b toward a respective dosing device 17a or 17b and toward the dough-dispensing mouths 4.

The extruder 2 further comprises, at the bottom, a dough-distributing block 18.

Said block is canalized in fluid communication at the top with the outlet openings of the dosing devices 17a and 17b, and onto said block the extrusion die 3, provided with a plurality of dough-dispensing rotatable mouths 4, is mounted at the bottom.

In the present embodiment, each rotatable mouth 4 has two dough-dispensing nozzles 20a and 20b, said nozzles 20a and 20b being eccentric with reference to the axis of rotation X of the respective rotatable mouth 4 and being arranged aligned at the sides to the axis of rotation X of said rotatable mouth 4.

More specifically, one of the dispensing nozzles 20a of each rotatable mouth 4 is in fluid communication, through a respective channel 18a formed in the distributing block 18, with the outlet of the dosing device 17a of an extrusion head 11a, whereas the other dispensing nozzle 20b of each rotatable mouth 4 is in fluid communication, through a respective channel 18b formed in the distributing block 18, with the outlet of the dosing device 17b of the other extrusion head 11b.

In this way, the doughs pushed by the respective extruding rollers 13a or 13b toward the respective dosing devices 17a and 17b and dosed in preset volumes by said dosing devices 17a and 17b are separately conveyed through the channels 18a and the channels 18b of the distributing block 18 toward the respective dispensing nozzles 20a and 20b of the rotatable mouths 4 of the extrusion die 3, where they are separately extruded from said dispensing nozzles 20a and 20b.

The number and the arrangement of the rotatable mouths 4 in the extrusion die 3 may be varied at will according to particular and specific needs, for example productivity needs. For example, in one embodiment, the extrusion die 3 may have 20 rotatable mouths 4 arranged in quincunxes along the extrusion die 3 with a predetermined constant pitch between adjacent rotatable mouths.

Advantageously, in the present embodiment, the dispensing nozzles 20a and 20b of the rotatable mouths 4 have a profile in cross-section having substantially a star shape.

In this way, as will become clearer below, a rough and coarse surface is obtained in the dough strands extruded from the dispensing nozzles 20a and 20b of the rotatable mouths 4, thereby improving the perception of the end biscuit as an artisanal product.

Using the apparatus described above, a method for carrying out the process for the production of shortbread biscuits according to the present invention is now described. Said method comprises the preliminary preparation of, for example, two different doughs, one of which being of a different color due to the addition of a prefixed amount of cocoa powder, which is not contained in the other dough. The base dough is obtained by a first step of mixing vegetable and/or animal fat components (oils/butter), sugar, and possibly whole, skimmed and/or powdered milk. In a subsequent step, leavening powders, whole eggs without shell, chocolate, salt, honey, and flavorings are added q.s. while mixing. Finally, flour and possibly water are added. As already noted, the second dough is obtained by adding a suitable amount of cocoa powder to the base dough.

The doughs (light-colored and dark-colored) thereby obtained are kept at a low temperature preferably between 16°C and 20°C and left to rest until predetermined viscoelastic characteristics were reached, in particular a texture between 6 and 11 Newton, for example between 8 and 11 Newton. Said texture is determined by measuring the average force of compression of a homogeneous amount of dough in a cylinder having a diameter of 25 mm and a height of 40 mm and having inside a piston sliding along the longitudinal axis of the cylinder, and lateral holes at 120° on the bottom of the cylinder, having a height of 7.8 mm and a thickness of 6.9 mm, to extrude said dough from the above-mentioned holes with a piston stroke of 40 mm.

Subsequently, the above-mentioned doughs are separately fed into the respective hoppers 15a and 15b of the extrusion machine 2, where they are conveyed by the respective extruding rollers 13a and 13b into the respective compression chambers 12a and 12b and pushed by pressure by said extruding rollers 13a and 13b toward the respective dosing devices 17a and 17b (see arrows B and C in Figure 2) and toward the mouths 4.

Preferably, the extruding rollers 13a and 13b are put in rotation by the motors associated therewith at a speed between 6 rpm and 14 rpm, preferably between 6.7 rpm and 12.7 rpm, wherein the extruding rollers 13a of one dough and the extruding rollers 13b of the other dough can have the same or different speeds of rotation depending on the viscoelastic characteristics of said doughs, so as to have a predetermined ratio of the extrusion pressures of said doughs, for example a light-colored dough/dark-colored dough ratio between 2:3 and 3:2, said ratio being preferably 1:1.

The doughs pushed by the respective extruding rollers 13a and 13b are then fed into the respective dosing devices 17a and 17b, where they are dosed in predetermined and preferably constant flow rates and pushed toward the respective dispensing nozzles 20a and 20b of the rotatable mouths 4, passing through the respective connecting channels 18a and 18b formed in the distributing block 18. The dosing devices 17a and 17b consist each of a dosing volumetric lobe pump which is set at a speed between 6 rpm and 12 rpm, preferably between 8 and 10 rpm.

Preferably, the speed of the dosing devices 17a and 17b is adjusted to dose volumetric flow rates of the above-mentioned doughs which are substantially equal to each other, so as to obtain a substantially equal speed of extrusion of the doughs from the respective dispensing nozzles 20a and 20b of the rotatable mouths 4.

The doughs reaching the respective dispensing nozzles 20a and 20b are dispensed by the latter in the form of respective continuous strands 21a and 21b of said doughs toward the underlying conveyor belt 5, which is arranged with its active branch 5a at a distance from 60 mm to 90 mm, preferably 80 mm, from the rotatable mouths 4.

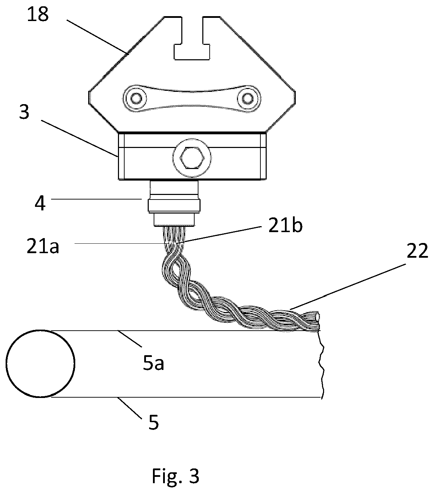

When exiting the mouths 4 of the extrusion die 3, the continuous strands 21a and 21b of the above-mentioned doughs are independent, substantially rectilinear and parallel. A pair of continuous strands consisting of a continuous strand 21a of one of said two doughs (for example, the light-colored dough) and a continuous strand 21b of the other one of said two doughs (for example, the dark-colored dough) are extruded from the nozzles 20a and 20b of each rotatable mouth 4 of the extrusion head 3, as it can be seen particularly in Figure 3.

The moment the free ends of the above-mentioned strands 21a and 21b of doughs touch the active branch 5a of the conveyor belt 5, remaining anchored, i.e. adhered by friction, to it, the rotatable mouths 4 of the extrusion die 3 are put in rotation so as to cause the rotation of the dispensing nozzles 20a and 20b of the mouths 4 around the rotation axis X of the respective mouth 4, while the conveyor belt 5 is moved forward at a predetermined speed.

Preferably, the rotatable mouths are rotated at a speed between 75 rpm and 105 rpm, preferably between 88 rpm and 92 rpm, whereas the conveyor belt 5 is moved forward at a speed between 2.9 m/min and 3.5 m/min, preferably between 3.1 m/min and 3.3 m/min.

Under this condition, in the segment between the rotatable mouths 4 of the extrusion die 3 and the active branch 5a of the conveyor belt 4, the continuous strands 21a and 21b of the two different doughs of each strand pair dispensed by the nozzles 20a and 20b of a rotatable mouth 4 are helicoidally wound one around the other thereby forming a semifinished product consisting of a plurality of continuous plaits 22, that are rectilinear and substantially parallel to each other, of said different doughs, and said plaits come to lay onto the conveyor belt 5. A plait 22 of this type laid on the conveyor belt 5 is shown in Figure 3.

It should be noted that the above-mentioned helicoidal winding of each strand pair, one strand around the other, by means of rotation of the rotatable mouths 4 is made possible by the fact that the two strands, which initially are independent, when touching with their free ends the conveyor belt 5, remain anchored on it thereby becoming integral with each other in that moment and in that point. Only after said union, the rotation of the rotatable mouths 4 causes the desired helicoidal winding.

The pitch of the winding can be varied as desired by varying the speed of rotation of the mouths 4 of the extrusion head. Preferably, the helicoidal pitch of each continuous plait 22 is between 18 mm and 22 mm, for example 20 mm.

It should be noted that, thanks to the use of an extrusion die provided with rotatable mouths with eccentric dispensing nozzles and to the use of separate extrusion heads provided with independent compression chambers for respective different doughs, each chamber being in fluid communication with a respective dispensing nozzle of each rotatable mouth, it is possible to separately extrude strands of said doughs and to helicoidally wind said strands one around the other so as to form plaits of the above-mentioned doughs once the free ends of said strands are joined onto the underlying conveyor belt, without any occurrence of substantial breaks of said strands. This is possible thanks to a suitable adjustment of the speed of extrusion of the above-mentioned doughs from the respective compression chambers toward the respective dispensing nozzles according to the viscoelastic characteristics of said doughs. Moreover, thanks to the use of dosing devices, in particular volumetric dosing pumps, for dosing the doughs in the separate extrusion heads, it is possible to conveniently adjust the flow rates (volume/time) of the doughs sent to the respective dispensing nozzles, thereby obtaining extruded dough strands with constant volume and shape.

In this way, biscuits or similar food products in a plait shape are advantageously obtained after baking, in which, in contrast with the prior art, all the plaited doughs have a helicoidal development and the doughs are clearly visible, thereby showing, in the case the doughs are different from each other, a dichotomy of flavors and/or colors.

Moreover, using dies provided with rotatable mouths having more than two eccentric holes and a number of the above-described extrusion heads in the extrusion machine equal to the number of eccentric holes of said mouths, it is possible to obtain helicoidal windings of three or more doughs. It is also possible to vary the shape of the winding strand by varying the geometric shape of the eccentric dough-dispensing nozzles, for example, by having said nozzles provided with a profile in cross-section having a circular, square, rectangular, polygonal, and similar, shape.

In particular, according to a preferred embodiment of the invention, the dispensing nozzles 20a and 20b of the rotatable mouths 4 have a profile in cross-section having substantially a star shape. Advantageously, the particular star shape of the dispensing nozzles allows to obtain a rough and coarse surface in the continuous plaits, thereby improving the perception of the end biscuit as an artisanal product.

It should be noted that the size and the surface of the dispensing nozzles also contribute to the thickness and the width of the strands of the doughs forming the respective continuous plaits.

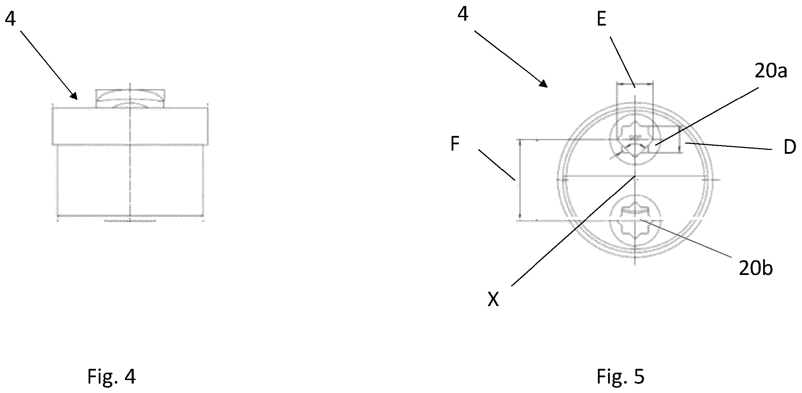

For example, the star-shaped profile of the dispensing nozzles may have minimum size D equal to 7.82 mm, maximum size E equal to 10.63 mm, and a center-to-center distance F between opposite nozzles of each mouth equal to 24 mm (see Figure 5).

The continuous plaits 22 constituting the above-mentioned semifinished product, which are continuously laid onto the conveyor belt 5, are directed to a vertical cutting machine 6, which, in a known way, provides parts P of said plaits of prefixed length (for example, 60 mm), and set them apart from each other. Said parts P are indicated with P in Figure 1.

Subsequently, the parts P of semifinished product (for example, uncooked shortbread biscuits) are fed in continuous into the oven 5, where they are baked and unloaded after a residence time between 11 minutes and 17 minutes, for example 14 minutes.

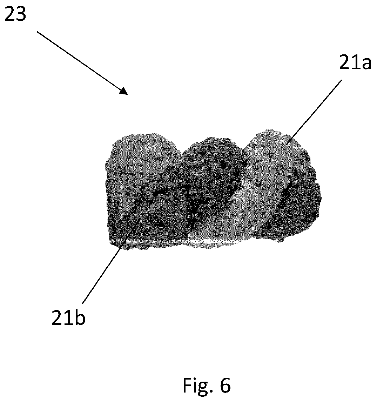

The biscuits 23 thereby obtained, for example shortbread biscuits, are in the shape of a plait made of two different baked doughs (for example, the light-colored dough 21a and the dark-colored dough 21b), both having helicoidal development and being plaited with each other (see Figure 6). Said biscuits generally have a moisture content between 2 % and 5%, for example a moisture content of about 3.8%.

Moreover, the biscuits thereby obtained have a breaking strength (or fracturing index) between 750 Newton and 1000 Newton, said breaking strength being determined by means of a dynamometer provided with a load cell of 50Kg and Kramer cell (60x70cm -10 blades) by measuring the maximum force applied to obtain crushing of the biscuit. It was also observed that at least 30% by weight of the biscuit fragments after breaking, preferably between 30% and 50% by weight, have a particle size lower than 1000 µm.

In this way, the biscuit has a good hardness, whereas the above-indicated particle size distribution of the biscuit fragments allows the biscuit to have a good crumbliness and good characteristics of absorption of a liquid (dunking), such as for example milk.

Obviously, by conveniently adjusting the size and the surface of the dispensing nozzles and the cutting frequency of the vertical cutting machine 6, it is possible to obtain biscuits having, after baking, the desired and/or preset size (length, width, and thickness) and weight.

According to an embodiment of the process according to the invention, a so-called closing machine 9 may be provided in the above-described apparatus, said closing machine giving the single parts P coming from the cutting machine 7 an annular shape (for example, a circular shape, by means of a tarallo-making machine). Moreover, a browning-glazing device 10 operating on the parts P of the semifinished product may be provided to obtain the desired decoration or overlay of the end biscuits.

As regards the doughs, more than satisfying results for obtaining shortbread biscuits were obtained when their compositions comprised the components shown in the respective following Tables 1 and 2 in the amount limits indicated by weight of the weight of the composition.

**Table 1**

| LIGHT-COLORED DOUGH | |
|---|---|
| Components | % by weight |
| Whole wheat flour | 40-60 |
| Caster sugar | 17-26 |
| Sunflower oil | 6.5-10 |
| Chocolate | 5.5-8.5 |
| Butter | 4-7 |
| Buckwheat flour | 2.2-4.2 |
| Eggs | 2.9-4.8 |
| Honey | 0.4-0.6 |
| Leavening agents | 0.3-0.5 |
| Salt | 0.2-0.4 |
| Flavorings | 0.2-0.4 |
| Water | 8-12 |

**Table 2**

| DARK-COLORED DOUGH | |
|---|---|
| Components | % by weight |
| Wheat flour | 35-55 |
| Caster sugar | 16-24 |
| Sunflower oil | 8-12 |
| Chocolate | 9-13 |
| Butter | 4-6 |
| Cocoa | 2-4 |
| Eggs | 0.8-1.2 |
| Honey | 0.5-0.7 |
| Leavening agents | 0.3-0.5 |
| Salt | 0.1-0.3 |
| Flavorings | 0.2-0.4 |
| Water | 12-16 |

The invention so conceived may be subject to variants and modifications, especially considering that, by acting on the shapes of the dispensing nozzles of the extrusion die, it is possible to obtain strands having an irregular profile and/or different design and size, thereby varying the relative percent amount of one dough compared to the others. It is further to be observed that said variations can be easily implemented in progress, by changing the extrusion die with another one having the desired geometric characteristics.

Other embodiments of the above-described process may be made considering that the final shape and pitch of the winding strands may vary depending on some variables, such as:
- the shape, the size, and the relative arrangement of the eccentric extrusion nozzles of the doughs (in particular, the radial distance between the nozzles of the mouths 4),
- speed of extrusion of the doughs,
- speed of the conveyor belt 5,
- distance of the extrusion die 3 from the conveyor belt 5,
- speed of rotation of the rotatable mouths 22.

It is to be kept in mind that the above description concerns the production of shortbread biscuits, whereas the process of the present invention can also be used to obtain other biscuits. As a consequence, the data relating to the compositions of the doughs, as well as the data describing the number and the arrangement of the rotatable mouths and the shape of the dispensing nozzles of the extrusion die, are not to be understood as limiting the invention, which is defined in the appended claims.

Based on the above, many more modifications and/or variants can be made to the present invention without departing from its scope of protection as defined by the following claims.

## Claims

1. Process for obtaining biscuits (23) in a plait shape, comprising the steps of:
- providing an apparatus (1) comprising an extruder (2) having at least one rotatable mouth (4) provided with at least two dispensing nozzles (20a,20b) that are eccentric with reference to the axis of rotation (X) of the respective rotatable mouth (4), at least two independent chambers (12a,12b), which are each in fluid communication with a respective dispensing nozzle (20a;20b) of said at least one rotatable mouth (4), and at least two dosing devices (17a, 17b), which are each arranged between a respective chamber (12a;12b) of the extruder (2) and said at least one rotatable mouth (4), the apparatus (1) further comprising a conveyor belt (5) arranged under said nozzles (20a,20b),
- preparing at least two doughs for biscuits having a prefixed viscoelasticity,
- compressing said doughs in the respective chambers (12a, 12b) of the extruder (2) and pushing them in predetermined flow rates from said dosing devices (17a,17b) toward a respective dispensing nozzle (20a;20b) of said at least one rotatable mouth (4),
- continuously extruding said doughs from the respective dispensing nozzles (20a;20b) of said at least one rotatable mouth (4), thereby obtaining respective strands (21a,21b) of said doughs exiting the nozzles (20a,20b) of each rotatable mouth (4), said strands (21a,21b) of said doughs being independent, substantially rectilinear and having respective free ends, vertically directed towards and onto said conveyor belt in motion,
- joining the free ends of said strands (21a,21b) to each other by anchoring them onto said conveyor belt (5),
- continuously helicoidally winding up the strands (21a,21b) of the doughs exiting said at least one rotatable mouth (4) by rotating said at least one rotatable mouth (4), thereby obtaining a semifinished product comprising at least one continuous plait (22) of said doughs having each a helicoidal development and being plaited with each other,
- subjecting said semifinished product comprising at least one continuous plait (22) to an operation of cutting and portioning into parts (P) of a prefixed length, and
- subjecting said parts (P) of semifinished product to baking, thereby obtaining biscuits in a plaited shape,
wherein said extruder (2) further comprises two pairs of extruding rollers (13a; 13b) that are side by side each placed in each chamber (12a;12b) upstream of said dosing devices (17a,17b), and said step of compression of the doughs in the respective chambers (12a,12b) is carried out by means of said extruding rollers (13a, 13b), said dosing devices (17a, 17b) being volumetric dosing pumps, each of which being in fluid communication with an outlet opening of a respective compression chamber (12a;12b) and in fluid communication with a respective dispensing nozzle (20a;20b) of said at least one mouth (4).

2. Process according to claim 1, wherein said extruding rollers (13a, 13b) are put in rotation at a speed between 6 rpm and 14 rpm.

3. Process according to claim 1 or 2, wherein said strands (21a,21b) of said doughs are dispensed at a prefixed distance over said conveyor belt, said distance preferably being between 60 mm and 90 mm.

4. Process according to any one of the preceding claims, wherein at least one of said doughs is based on shortcrust pastry.

5. Process according to any one of the preceding claims, wherein said doughs are different from each other.

6. Process according to any one of the preceding claims, wherein said doughs have a temperature between 16°C and 20°C and a texture between 6 and 11 Newton, said texture being determined by measuring the average force of compression of a homogeneous amount of dough in a cylinder having a diameter of 25 mm and a height of 40 mm and having inside a piston sliding along the longitudinal axis of the cylinder, and lateral holes at 120° on the bottom of the cylinder, having a height of 7.8 mm and a thickness of 6.9 mm, to extrude said dough from the above-mentioned holes with a piston stroke of 40 mm.

7. Process according to any one of the preceding claims, wherein said at least one rotatable mouth (4) is rotated at a speed between 75 rpm and 105 rpm, preferably between 88 rpm and 92 rpm and said conveyor belt (5) is moved forward at a speed between 2.9 m/min and 3.5 m/min, preferably between 3.1 m/min and 3.3 m/min.

8. Process according to any one of the preceding claims, wherein said dispensing nozzles (20a,20b) of said at least one rotatable mouth (4) have a profile in cross-section having substantially a star shape.

## Patentansprüche

1. Verfahren zum Herstellen von Keksen (23) in Zopfform, mit den Schritten:
- Bereitstellen einer Vorrichtung (1), die einen Extruder (2) mit mindestens einem rotierbaren Mundstück (4), das mit mindestens zwei Ausgabedüsen (20a, 20b) versehen ist, die bezüglich der Rotationsachse (X) des jeweiligen rotierbaren Mundstücks (4) exzentrisch angeordnet sind, mindestens zwei voneinander unabhängigen Kammern (12a, 12b), die jeweils in Fluidverbindung mit einer jeweiligen Ausgabedüse (20a; 20b) des mindestens einen rotierbaren Mundstücks (4) stehen, und mindestens zwei Dosiergeräten (17a, 17b) aufweist, die jeweils zwischen einer jeweiligen Kammer (12a; 12b) des Extruders (2) und dem mindestens einen rotierbaren Mundstück (4) angeordnet sind, wobei die Vorrichtung (1) weiterhin ein Förderband (5) aufweist, das unter den genannten Düsen (20a, 20b) angeordnet ist,
- Herstellen von mindestens zwei Teigen für Kekse mit einer vorgegebenen Viskoelastizität,
- Komprimieren der genannten Teige in den jeweiligen Kammern (12a, 12b) des Extruders (2) und Ausstoßen derselben in vorbestimmten Durchflussraten aus den genannten Dosiergeräten (17a, 17b) in Richtung einer jeweiligen Ausgabedüse (20a; 20b) des mindestens einen rotierbaren Mundstücks (4),
- kontinuierliches Extrudieren der genannten Teige aus den jeweiligen Ausgabedüsen (20a; 20b) des mindestens einen rotierbaren Mundstücks (4), wodurch jeweilige Stränge (21a, 21b) der genannten Teige erhalten werden, die aus den Düsen (20a, 20b) jedes rotierbaren Mundstücks (4) austreten, wobei die genannten Stränge (21a, 21b) der genannten Teige voneinander unabhängig, im Wesentlichen geradlinig sind und jeweilige freie Enden haben, die vertikal gegen und auf das genannte, in Bewegung befindliche Förderband (5) gerichtet sind,
- Verbinden der freien Enden der genannten Stränge (21a, 21b) miteinander, indem sie auf dem genannten Förderband (5) verankert werden,
- kontinuierliches helikoidales Aufwickeln der genannten Stränge (21a, 21b) der aus dem genannten mindestens einen rotierbaren Mundstück (4) austretenden Teige durch Drehen des mindestens einen rotierbaren Mundstücks (4), wodurch ein Halbfertigprodukt aus mindestens einem fortlaufenden Zopf (22) der genannten Teige erhalten wird, die jeweils eine helikoidale Ausbildung haben und miteinander verflochten sind,
- Unterziehen des genannten Halbfertigprodukts aus mindestens einem fortlaufenden Zopf (22) einem Schneid- und Portionierungsvorgang zur Bildung von Teilen (P) mit vorgegebener Länge, und
- Unterziehen der genannten Teile (P) des Halbfertigprodukts einem Backvorgang, wodurch Kekse in Zopfform erhalten werden,
wobei der genannte Extruder (2) weiterhin zwei Paare von Extrudierwalzen (13a; 13b) aufweist, die nebeneinander jeweils in jeder Kammer (12a; 12b) stromaufwärts der genannten Dosiergeräte (17a, 17b) angeordnet sind, und wobei der genannte Schritt des Komprimierens der Teige in den jeweiligen Kammern (12a, 12b) mittels der genannten Extrudierwalzen (13a, 13b) durchgeführt wird, wobei die genannten Dosiergeräte (17a, 17b) volumetrische Dosierpumpen sind, von denen jede in Fluidverbindung mit einer Auslassöffnung einer jeweiligen Kompressionskammer (12a; 12b) und in Fluidverbindung mit einer jeweiligen Ausgabedüse (20a; 20b) des mindestens einen Mundstücks (4) steht.

2. Verfahren nach Anspruch 1, bei dem die genannten Extrudierwalzen (13a, 13b) in Drehung mit einer Geschwindigkeit zwischen 6 U/min und 14 U/min versetzt werden.

3. Verfahren nach Anspruch 1 oder 2, bei dem die genannten Stränge (21a, 21b) der genannten Teige in einem vorgegebenen Abstand über dem genannten Förderband abgegeben werden, wobei dieser Abstand vorzugsweise zwischen 60 mm und 90 mm liegt.

4. Verfahren nach einem der vorhergehenden Ansprüche, bei dem mindestens einer der genannten Teige auf Mürbeteig basiert.

5. Verfahren nach einem der vorhergehenden Ansprüche, bei dem die genannten Teige voneinander verschieden sind.

6. Verfahren nach einem der vohergehenden Ansprüche, bei dem die genannten Teige eine Temperatur zwischen 16 °C und 20 °C und eine Textur zwischen 6 und 11 Newton aufweisen, wobei die Textur durch Messen der durchschnittlichen Kompressionskraft einer homogenen Menge des Teigs in einem Zylinder ermittelt wird, der einen Durchmesser von 25 mm und eine Höhe von 40 mm hat und darin einen Kolben hat, der entlang der Längsachse des Zylinders gleitet, sowie seitliche Öffnungen bei 120° am Boden des Zylinders hat, die eine Höhe von 7,8 mm und eine Dicke von 6,9 mm haben, um den genannten Teig mit einem Kolbenhub von 40 mm aus den genannten Öffnungen zu extrudieren.

7. Verfahren nach einem der vorhergehenden Ansprüche, bei dem das mindestens eine rotierbare Mundstück (4) mit einer Drehzahl zwischen 75 U/min und 105 U/min, vorzugsweise zwischen 88 U/min und 92 U/min gedreht wird und das genannte Förderband (5) mit einer Geschwindigkeit zwischen 2,9 m/min und 3,5 m/min, vorzugsweise zwischen 3,1 m/min und 3,3 m/min, vorwärts bewegt wird.

8. Verfahren nach einem der vorhergehenden Ansprüche, bei dem die genannten Ausgabedüsen (20a, 20b) des mindestens einen rotierbaren Mundstücks (4) ein im Wesentlichen sternförmiges Querschnittsprofil aufweisen.

## Revendications

1. Procédé pour obtenir des biscuits (23) en forme de tresse, comprenant les étapes consistant à:
- fournir un appareil (1) comprenant une extrudeuse (2) ayant au moins une bouche rotative (4) équipée d'au moins deux buses de distribution (20a,20b) qui sont excentriques par rapport à l'axe de rotation (X) de la bouche rotative (4) respective, au moins deux chambres indépendantes (12a,12b), qui sont chacune en communication fluidique avec une buse de distribution (20a;20b) respective de ladite au moins une bouche rotative (4), et au moins deux dispositifs de dosage (17a, 17b), qui sont chacun disposés entre une chambre (12a;12b) respective de l'extrudeuse (2) et ladite au moins une bouche rotative (4), l'appareil (1) comprenant en outre une bande transporteuse (5) disposée sous lesdites buses (20a,20b),
- préparer au moins deux pâtes pour biscuits ayant une viscoélasticité préfixée,
- comprimer lesdites pâtes dans les chambres (12a, 12b) respectives de l'extrudeuse (2) et les pousser avec des débits prédéterminés à partir desdits dispositifs de dosage (17a,17b) vers une buse de distribution (20a;20b) respective de ladite au moins une bouche rotative (4),
- extruder en continu lesdites pâtes à partir des buses de distribution (20a;20b) respectives de ladite au moins une bouche rotative (4), obtenant ainsi des brins (21a,21b) respectifs desdites pâtes sortant des buses (20a,20b) de chaque bouche rotative (4), lesdits brins (21a,21b) desdites pâtes étant indépendants, essentiellement rectilignes et ayant des extrémités libres respectives, dirigées verticalement vers et sur ladite bande transporteuse en mouvement,
- joindre les extrémités libres desdits brins (21a,21b) entre elles en les ancrant sur ladite bande transporteuse (5),
- enrouler hélicoïdalement en continu les brins (21a,21b) des pâtes sortant de ladite au moins une bouche rotative (4) en tournant ladite au moins une bouche rotative (4), obtenant ainsi un produit semi-fini comprenant au moins une tresse continue (22) desdites pâtes ayant chacune un développement hélicoïdal et étant tressées entre elles,
- soumettre ledit produit semi-fini comprenant au moins une tresse continue (22) à une opération de découpe et de portionnage en parties (P) d'une longueur préfixée, et
- soumettre lesdites parties (P) de produit semi-fini à cuisson au four, obtenant ainsi des biscuits en forme de tresse,
dans lequel ladite extrudeuse (2) comprend en outre deux paires de rouleaux d'extrusion (13a;13b) qui sont chacun positionnés côte à côte dans chaque chambre (12a;12b) amont desdits dispositifs de dosage (17a,17b), et ladite étape de compression des pâtes dans les chambres (12a,12b) respectives est effectuée par l'intermédiaire desdits rouleaux d'extrusion (13a, 13b), lesdits dispositifs de dosage (17a, 17b) étant des pompes volumétriques de dosage, dont chacune est en communication fluidique avec une ouverture de sortie d'une chambre de compression (12a;12b) respective et en communication fluidique avec une buse de distribution (20a;20b) respective de ladite au moins une bouche (4).

2. Procédé selon la revendication 1, dans lequel lesdits rouleaux d'extrusion (13a, 13b) sont mis en rotation à une vitesse comprise entre 6 tr/min et 14 tr/min.

3. Procédé selon la revendication 1 ou 2, dans lequel lesdits brins (21a,21b) desdites pâtes sont distribués à une distance préfixée sur ladite bande transporteuse, ladite distance étant préférablement comprise entre 60 mm et 90 mm.

4. Procédé selon l'une quelconque des revendications précédentes, dans lequel au moins une desdites pâtes est à base de pâte sablée.

5. Procédé selon l'une quelconque des revendications précédentes, dans lequel lesdites pâtes sont différentes l'une de l'autre.

6. Procédé selon l'une quelconque des revendications précédentes, dans lequel lesdites pâtes ont une température comprise entre 16°C et 20°C et une texture comprise entre 6 et 11 Newtons, ladite texture étant déterminée en mesurant la force de compression moyenne d'une quantité homogène de pâte dans un cylindre ayant un diamètre de 25 mm et une hauteur de 40 mm et contenant un piston coulissant le long de l'axe longitudinal du cylindre, et des trous latéraux à 120° au fond du cylindre, ayant une hauteur de 7.8 mm et une épaisseur de 6.9 mm, pour extruder ladite pâte des trous susmentionnés avec une course du piston de 40 mm.

7. Procédé selon l'une quelconque des revendications précédentes, dans lequel ladite au moins une bouche rotative (4) est tournée à une vitesse comprise entre 75 tr/min et 105 tr/min, préférablement comprise entre 88 tr/min et 92 tr/min et ladite bande transporteuse (5) est avancée à une vitesse comprise entre 2.9 m/min et 3.5 m/min, préférablement comprise entre 3.1 m/min et 3.3 m/min.

8. Procédé selon l'une quelconque des revendications précédentes, dans lequel lesdites buses de distribution (20a,20b) de ladite au moins une bouche rotative (4) ont un profil en coupe transversale ayant essentiellement une forme d'étoile.
